# EUROPEAN PATENT APPLICATION

(11) **EP 0 751 410 A2**
(43) Date of publication of application: **02.01.1997**
(21) Application number: 96304514.1
(22) Date of filing: 18.06.1996
(51) Int. Cl.: G02B 6/27

(54) **Optical fiber having polarizer with reduced optical loss**

(30) Priority: 27.06.1995 US 495280
(71) Applicant: AT&T Corp., New York, NY 10013-2412 (US)
(72) Inventor: Stone, Julian, Rumson, New Jersey 07760 (US)
(74) Representative: Johnston, Kenneth Graham

(57) **Abstract**

In accordance with the present invention, an optical fiber is provided that includes a first optical fiber section having a first end facet and a second optical fiber section having a second end facet. A dichroic glass polarizer optically couples the first end facet to the second end facet. The polarizer has a thickness of less than approximately 50 microns. An optically transparent adhesive may fix the glass polarizer to the first end facet. In addition, a connector such as a rotary glass capillary connector or a straight tip connector may be used to connect the first optical fiber section to the second optical fiber section.

## Description

### Field of the Invention

This invention relates to optical fibers, and more particularly to optical fibers for transmitting optical energy in predetermined polarization states.

### Background of the Invention

A number of techniques are known for transmitting power in selected polarization states through an optical fiber. For example, polarization maintaining fibers remove the circular symmetry normally associated with optical fibers by using either non-circular cross sections or refractive index anisotropies. A problem with such optical fibers is that the optical modes propagating therein have nonstandard sizes, substantially increasing the optical loss that results when the optical power is coupled into another fiber.

Another selectively polarizing optical fiber employs a bulk polarizer such as a polarized glass sheet. The glass polarizer is sandwiched between the end facets of two optical fiber sections and fixed in place with adhesive. However, glass polarizers typically have a thickness on the order of approximately 1 mm and thus the optical beam must traverse this distance outside the confines of the optical fiber. Since the optical beam is not subject to the waveguiding properties of the optical fiber while traversing the glass polarizer, the beam begins to diverge. If the distance between the end facets of the optical fiber is greater than approximately 50 microns the beam divergence becomes great enough to cause significant optical power loss as the beam is coupled from one end facet to the other. Accordingly, optical fibers incorporating commercially available glass polarizers are unsatisfactory because of the resulting optical loss. Other devices attempting to overcome this optical loss problem rely on the fact that as the diameter of an optical beam increases its rate of divergence decreases. Such devices incorporate a beam expander to increase the diameter of the beam before it traverses the polarizer. For a given level of optical loss, by increasing the diameter of the optical beam a thicker polarizer can be inserted between the end facets of the optical fibers relative to a device that does not use a beam expander. A problem with this device, however, is that since it requires a beam expander it is relatively complex.

### Summary of the Invention

In accordance with the present invention, an optical fiber is provided that includes a first optical fiber section having a first end facet and a second optical fiber section having a second end facet. A dichroic glass polarizer optically couples the first end facet to the second end facet. The polarizer has a thickness of less than approximately 50 microns. An optically transparent adhesive may fix the glass polarizer to the first end facet. In addition, a connector such as a rotary glass capillary connector or a straight tip connector may be used to connect the first optical fiber section to the second optical fiber section.

In accordance with another aspect of the invention, a method of making on optical fiber for transmitting optical energy in a preselected polarization state includes the steps of: thinning a prefabricated dichroic glass polarizer to a thickness of less than approximately 50 microns; fixing the thinned glass polarizer to an end facet of a first optical fiber section; and optically coupling an end facet of a second optical fiber section to the thinned glass polarizer.

### Brief Description of the Drawings

FIG. 1 shows a schematic diagram of the optical fiber having a dichroic glass polarizer constructed in accordance with the present invention.

FIG. 2 shows the glass polarizer sandwiched between the fiber sections and connected with a rotary connector.

### Detailed Description

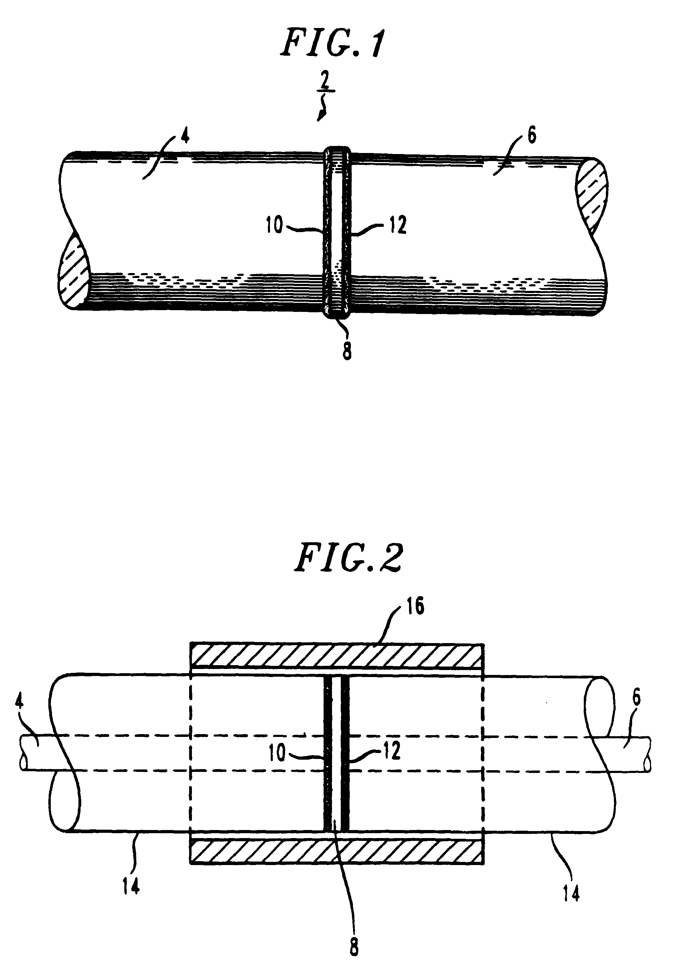

FIG. 1 shows a polarizing optical fiber 2 in accordance with the present invention. The optical fiber 2 includes first and second optical fiber sections 4 and 6, which respectively have first and second end facets 10 and 12. A dichroic glass polarizer 8 is sandwiched between the end facets 10 and 12 and fixed in place with a commercially available adhesive. The glass polarizer 8 has a thickness of less than approximately 50 microns to minimize the optical loss due to beam divergence over the thickness of the polarizer.

The polarizer 8 is prepared from a commercially available dichroic glass polarizer such as those manufactured by Corning Glass Works and sold under the tradename POLARCOR. Dichroic glass polarizers which are commercially available typically have a thickness on the order of approximately 1 mm. Such a polarizer cannot be satisfactorily integrated with an optical fiber because the resulting optical loss would be intolerable for many applications. In accordance with the present invention, the commercially available glass polarizer is thinned to a thickness of less than 50 microns. In one particular embodiment of the invention the glass polarizer is thinned to approximately 25 microns.

The thinning procedure is accomplished by a conventional polishing procedure using a polishing machine and abrasive pads or slurries.

Glass polarizers are typically available in large diameter sheets. Accordingly, the entire sheet may be first reduced to the desired thickness and then cut into individual glass polarizers that each have a diameter appropriate for mounting on an optical fiber end facet.

To connect the glass polarizer to the two optical fiber sections 4 and 6, the first optical fiber section 4 is inserted in a connector such as a rotary glass or ceramic capillary connector or a straight tip (ST) connector, for example. The glass polarizer 8 with the appropriate thickness and diameter is then glued to the end facet 10 with transparent epoxy. The second optical fiber section 6 is then inserted in the connector and fixed in place. If desired, the connection can be made permanent by gluing the connector in place on the fiber sections 4 and 6. FIG. 2 shows the placement of the fiber sections 4 and 6 and the glass polarizer 8 within a rotary connector 14. An alignment sleeve 16 functioning as a spring clip is shown over the rotary connector 14.

## Claims

1. An optical fiber comprising:
a first optical fiber section having a first end facet;
a second optical fiber section having a second end facet
a dichroic glass polarizer optically coupling the first end facet to the second end facet, said polarizer having a thickness of less than approximately 50 microns.

2. The optical fiber of claim l, further comprising an optically transparent adhesive fixing the glass polarizer to the first end facet.

3. The optical fiber of claim 2, further comprising a connector connecting the first optical fiber section to the second optical fiber section.

4. The optical fiber of claim 3, wherein the connector is either a rotary glass capillary connector, or is a straight tip connector.

5. The optical fiber of claim 3, further comprising adhesive fixing the connector to the first and second optical fiber sections.

6. The optical fiber of claim l, wherein the glass polarizer has a thickness of approximately 25 microns.

7. A method of making an optical fiber for transmitting optical energy in a preselected polarization state comprising the steps of:
thinning a prefabricated dichroic glass polarizer to a thickness of less than approximately 50 microns;
fixing the thinned glass polarizer to an end facet of a first optical fiber section;
optically coupling an end facet of a second optical fiber section to the thinned glass polarizer.

8. The method of claim 7, wherein the fixing step comprises the step of fixing the glass polarizer to the first end facet with an optically transparent adhesive.

9. The method of claim 7, wherein the optical coupling step comprises the step of connecting the first optical fiber section to the second optical fiber section with a connector.

10. The method of claim 9, wherein the connector is either a rotary glass capillary connector, or is a straight tip connector.

11. The method of claim 8, further comprising the step of fixing the connector to the first and second optical fiber sections with adhesive.

12. The method of claim 7, wherein said glass polarizer is thinned to a thickness of approximately 25 microns.

13. The method of claim 7, wherein the step of thinning the glass polarizer comprises the step of cutting the glass polarizer to a predetermined diameter from a glass polarizer sheet.
